(19) Europäisches Patentamt / European Patent Office / Office européen des brevets

(11) **EP 4 286 545 A1**

(12) **EUROPEAN PATENT APPLICATION**
published in accordance with Art. 153(4) EPC

(43) Date of publication:
**06.12.2023 Bulletin 2023/49**

(21) Application number: **21921660.3**

(22) Date of filing: **14.12.2021**

(51) International Patent Classification (IPC):
**C22B 1/00** (2006.01)    **C22B 1/10** (2006.01)
**C22B 5/02** (2006.01)    **C22B 7/00** (2006.01)
**C22B 15/00** (2006.01)    **C22B 23/02** (2006.01)
**C22B 26/12** (2006.01)

(52) Cooperative Patent Classification (CPC):
**C22B 1/00; C22B 1/10; C22B 5/02; C22B 7/00;
C22B 15/00; C22B 23/02; C22B 26/12;
Y02P 10/20; Y02W 30/84**

(86) International application number:
**PCT/JP2021/045997**

(87) International publication number:
**WO 2022/163179 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.01.2021 JP 2021011024**

(71) Applicant: **SUMITOMO METAL MINING CO., LTD.**
**Tokyo**
**105-8716 (JP)**

(72) Inventor: **YAMASHITA Yu**
**Niihama-shi, Ehime 792-0002 (JP)**

(74) Representative: **Jones, Nicholas Andrew**
**Withers & Rogers LLP**
**2 London Bridge**
**London SE1 9RA (GB)**

(54) **METHOD FOR RECOVERING VALUABLE METAL**

(57)    A method capable of inexpensively recovering valuable metals is provided. The method for recovering a valuable metal includes: a preparation step of preparing a charge containing at least lithium (Li) and a valuable metal; an oxidation and reductive melting step of subjecting the charge to an oxidation treatment and a reductive melting treatment to produce a reduced product containing a molten alloy and a slag, the molten alloy containing the valuable metal; and a slag separation step of separating the slag from the reduced product to recover the molten alloy, in which the mole ratio of lithium (Li) to aluminum (Al) (Li/Al ratio) in the slag is 0.15 or more and less than 0.40, and the mole ratio of calcium (Ca) to aluminum (Al) (Ca/Al) in the slag is 0.15 or more.

FIG. 1

DISCARDED LITHIUM ION BATTERY

DISCARDED BATTERY PRETREATMENT STEP — S1

CRUSHING STEP — S2

OXIDATIVE ROASTING STEP — S3

REDUCTIVE MELTING STEP — S4

SLAG SEPARATION STEP — S5

SLAG     ALLOY

EP 4 286 545 A1

**Description**

TECHNICAL FIELD

The present invention relates to a method for recovering a valuable metal.

BACKGROUND ART

In recent years, lithium ion batteries have become popular as lightweight and high-power secondary batteries. A well-known lithium ion battery has a structure including an outer case, and negative and positive electrode materials, a separator, and an electrolytic solution, which are sealed in the outer case.

For example, the outer case includes a metal, such as aluminum (Al) and iron (Fe). The negative electrode material includes a negative electrode current collector (e.g., a copper foil) and a negative electrode active material (e.g., graphite) bonded to the current collector. The positive electrode material includes a positive electrode current collector (e.g., an aluminum foil) and a positive electrode active material (e.g., lithium nickelate, lithium cobaltate) bonded to the current collector. The separator includes, for example, a porous polypropylene resin film. The electrolytic solution contains an electrolyte, such as lithium hexafluorophosphate ($LiPF_6$) .

Hybrid cars and electric vehicles are among the major applications of lithium ion batteries. According to the life cycle of such vehicles, therefore, a huge number of lithium ion batteries, which are now installed in them, are expected to be discarded in the future. Some lithium ion batteries are also discarded if found defective during the manufacturing process. It is desirable to reuse such used batteries and such defective batteries occurring in the manufacturing process (hereinafter such batteries will be referred to as "discarded lithium ion batteries") as a resource.

A proposed technique for the reuse includes a pyrometallurgical smelting process that includes entirely melting discarded lithium ion batteries in a high-temperature furnace. Such a pyrometallurgical smelting process includes melting crushed discarded lithium ion batteries; separating valuable metals, such as cobalt (Co), nickel (Ni), and copper (Cu), which are to be recovered, and less valuable metals, such as iron (Fe) and aluminum (Al), based on the difference in oxygen affinity between the valuable and less valuable metals; and recovering the valuable metals. This technique oxidizes the less valuable metals as much as possible to form a slag while it prevents the oxidation of the valuable metals as much as possible and recovers them in the form of an alloy.

Patent Document 1 discloses a technology of a process for the recovery of enthalpy and metals from lithium ion batteries on a copper smelter. Specifically, it discloses a process comprising the steps of: feeding a useful charge and slag formers to the smelter; and adding heating and reducing agents, characterized in that at least part of the heating and/or reducing agents is replaced by lithium ion batteries containing one or more of metallic iron, metallic aluminum, and carbon. Using such a copper smelter, if possible, may allow valuable metals, such as copper and nickel, to be efficiently recovered from lithium ion batteries in conjunction with copper smelting. In such copper smelting, cobalt will be distributed into a slag. A technique for recovering cobalt may include, for example, roasting discarded lithium ion batteries to separate an alloy and a slag; and subjecting the alloy to a hydrometallurgical process.

In addition, Patent Document 2 discloses a valuable metal recovery method for recovering valuable metals including nickel and cobalt from discarded lithium ion batteries containing nickel and cobalt. Specifically, it discloses a method including: a melting step that includes subjecting the discarded batteries to melting to obtain a molten product; an oxidation step that includes subjecting the molten product to an oxidation treatment during the melting step or subjecting the discarded batteries to an oxidation treatment before the melting step; a slag separation step that includes separating a slag from the molten product to recover an alloy including the valuable metals; and a dephosphorization step that includes separating phosphorus from the alloy, wherein the dephosphorization step includes adding a lime-containing material to the alloy and then oxidizing the alloy. Patent Document 2 proposes a process that includes adding silicon dioxide ($SiO_2$) and calcium oxide (CaO) during the melting of discarded lithium ion batteries so that the resulting slag can have a lower melting point for the recovery of the valuable metals.

Patent Document 1: PCT International Publication No. WO2015/096945
Patent Document 2: Japanese Patent No. 5853585

DISCLOSURE OF THE INVENTION

Problems to be Solved by the Invention

Unfortunately, some problems remain with the methods proposed in Patent Documents 1 and 2. For example, the method of Patent Document 1 needs high-temperature treatment. The method of Patent Document 1 also has a problem in that the slag can erode the oxide in the treatment vessel to cause it to crack easily. Such erosion, if occurring, may extremely increase the facility cost and may preclude inexpensive recovery of valuable metals. In the method disclosed in Patent Document 2, a flux is added in a large amount, which leads to a low throughput for the treatment of discarded lithium ion batteries. Moreover, since the flux contains a large amount of silicon dioxide ($SiO_2$), which is an acidic oxide, phosphorus may be insufficiently removed in the form of an acidic oxide from the metallic material. Those problems cause the need to develop a technique for inexpensively recovering valuable metals from discarded lithium ion batteries.

The present invention has been proposed in view of such circumstances, and an object of the present invention is to provide a method capable of inexpensively recovering valuable metals.

Means for Solving the Problems

The present inventor conducted intensive studies in view of the problems described above. As a result, the present inventor focused on the mole ratio of lithium (Li) to aluminum (Al) (Li/Al ratio) and the mole ratio of calcium (Ca) to aluminum (Al) (Ca/Al ratio) in a slag, and found that specifying these ratios within a predetermined range leads to lowering the melting temperature of the slag to 1,575°C or less, and thus the valuable metals can be recovered inexpensively, to complete the present invention.

(1) A first aspect of the present invention relates to a method for recovering a valuable metal, the method comprising: a preparation step of preparing a charge comprising at least lithium (Li) and a valuable metal; an oxidation and reductive melting step of subjecting the charge to an oxidation treatment and a reductive melting treatment to produce a reduced product comprising a molten alloy and a slag, the molten alloy comprising the valuable metal; and a slag separation step of separating the slag from the reduced product to recover the molten alloy, wherein the mole ratio of lithium (Li) to aluminum (Al) (Li/Al ratio) in the slag is 0.15 or more and less than 0.40, and the mole ratio of calcium (Ca) to aluminum (Al) (Ca/Al) in the slag is 0.15 or more.

(2) A second aspect of the present invention relates to the method according to the first aspect, wherein the preparation step or the oxidation and reductive melting step, or both further comprise adding flux comprising calcium (Ca) to the charge and/or a material to be treated.

(3) A third aspect of the present invention relates to the method according to the first or second aspect, wherein the oxidation treatment comprises oxidatively roasting the charge to produce an oxidatively roasted product, and the reductive melting treatment comprises reductively melting the oxidatively roasted product to produce a reduced product.

(4) A fourth aspect of the present invention relates to the method according to any one of the first to third aspects, wherein the reductive melting treatment comprises introducing a reducing agent.

(5) A fifth aspect of the present invention relates to the method according to any one of the first to fourth aspects, wherein the reductive melting treatment comprises heating at a temperature of 1,300°C or more and 1,575°C or less.

(6) A sixth aspect of the present invention relates to the method according to the fifth aspect, wherein the reductive melting treatment comprises heating at a temperature of 1,350°C or more and 1,450°C or less.

(7) A seventh aspect of the present invention relates to the method according to any one of the first to sixth aspects, wherein the charge comprises a discarded lithium ion battery.

(8) An eighth aspect of the present invention relates to the method according to any one of the first to seventh aspects, wherein the slag comprises 15% by mass or less of manganese oxide (MnO).

Effects of the Invention

The present invention provides a method capable of inexpensively recovering valuable metals.

BRIEF DESCRIPTION OF THE DRAWINGS

FIG. 1 is a flowchart showing a flow of a method for recovering a valuable metal from a discarded lithium ion battery;
FIG. 2 is a schematic diagram showing the configuration of an apparatus for use in a test;
FIG. 3 is a phase diagram of the $Al_2O_3$-CaO-$Li_2O$ system (MnO = 0% by mass), with the measurements of the melting temperature plotted; and
FIG. 4 is a phase diagram of the $Al_2O_3$-CaO-$Li_2O$ system (MnO = 10% by mass), with the measurements of the melting temperature plotted.

PREFERRED MODE FOR CARRYING OUT THE INVENTION

Hereinafter, modes of the present invention (hereinafter, referred to as "present embodiments") will be described. It should be noted that the embodiments described below are not intended to limit the present invention and may be altered or modified in various ways without departing from the gist of the present invention.

<<1. Method for Recovery of Valuable Metals>>

The method for recovering a valuable metal according to a present embodiment is a method for recovering a valuable metal from a charge containing at least lithium (Li) and the valuable metal.

The valuable metal includes copper (Cu), nickel (Ni), cobalt (Co), and a combination thereof, and is at least one metal or alloy selected from the group consisting of copper (Cu), nickel (Ni), cobalt (Co), and a combination thereof. In addition, the method according to the present embodiment is directed to a recovery method mainly based on a pyrometallurgical process. The method may include a pyrometallurgical process and a hydrometallurgical process.

Specifically, this recovery method includes: a preparation step of preparing a charge comprising at least lithium (Li) and a valuable metal; an oxidation and reductive melting step of subjecting the charge to an oxidation treatment and a reductive melting treatment to produce a reduced product containing a molten alloy and a slag, the molten alloy containing the valuable metal; and a slag separation step of separating the slag from the resulting reduced product to recover the molten alloy.

In addition, the mole ratio of lithium (Li) to aluminum (Al) (Li/Al ratio) in the slag is 0.15 or more and less than 0.40, and the mole ratio of calcium (Ca) to aluminum (Al) (Ca/Al ratio) in the slag is 0.15 or more.

Hereinafter, the details of each step of the recovery method according to the present embodiment will be described below.

[Preparation Step]

The preparation step includes preparing a charge. The charge, which is the target to be treated for recovery of the valuable metal, contains lithium (Li), and in addition thereto, at least one valuable metal selected from the group consisting of copper (Cu), nickel (Ni), cobalt (Co), and any combination of these metals. The component (Li, Cu, Ni, Co) of the charge may be in a metallic form or a compound form, such as an oxide form. The charge may also contain an inorganic component other than the component (Li, Cu, Ni, Co) mentioned above and may further contain an organic component.

The charge may be any appropriate material, examples of which include discarded lithium ion batteries, dielectric materials (e.g., capacitors), and magnetic materials, etc. The charge may be in any form suitable for the treatment in the subsequent oxidation and reductive melting step. The preparation step may include subjecting the charge to crushing or any other treatment to convert it into a suitable form. The preparation step may further include subjecting the charge to heat treatment, separation, or other treatments to remove unnecessary components, such as water and organic materials.

[Oxidation and Reductive Melting Step]

The oxidation and reductive melting step includes subjecting the prepared charge to an oxidation treatment and a reductive melting treatment to produce a reduced product. This reduced product contains a molten alloy and a slag, having the molten alloy and the slag separated from each other.

The molten alloy contains the valuable metal. In the reduced product, therefore, a valuable metal-containing component (molten alloy) is separable from other components. This is attributable to the fact that the less valuable metal (e.g., Al) has a high affinity for oxygen while the valuable metal has a low affinity for oxygen. In general, for example, aluminum (Al), lithium (Li), carbon (C), manganese (Mn), phosphorus (P), iron (Fe), cobalt (Co), nickel (Ni), and copper (Cu) preferentially oxidize in the order of: Al > Li > C > Mn > P > Fe > Co > Ni > Cu. Namely, among them, aluminum (Al) is most prone to oxidation, while copper (Cu) is most resistant to oxidation. Therefore, the less valuable metal (e.g., Al) easily undergoes oxidation to form a slag, while the valuable metal (Cu, Ni, Co) undergoes reduction to form a molten metal (alloy). Thus, the less valuable metal and the valuable metal can be separated into a slag and a molten alloy, respectively.

In the recovery method according to the present embodiment, the mole ratio of lithium (Li) to aluminum (Al) (Li/Al ratio) in the slag is 0.15 or more and less than 0.40, the mole ratio of calcium (Ca) to aluminum (Al) (Ca/Al ratio) in the slag is 0.15 or more.

Lithium (Li) and calcium (Ca) contribute to a decrease in the melting temperature of the slag. Therefore, by controlling the components in the slag so as to achieve the mole ratio within the range described above, the melting temperature of the slag can be lowered to 1,575°C or less, for example, 1,450°C or less. Additionally, when the charge contains phosphorus, a slag rich in calcium (Ca) tends to remove the phosphorus easily. This is attributable to the fact that phosphorus produces an acidic oxide upon oxidization, whereas calcium (Ca) produces a basic oxide upon oxidization. Therefore, a larger amount of calcium (Ca) in the slag produces a more basic slag composition, and consequently makes it easier to incorporate phosphorus into the slag and remove it.

The slag may be free of aluminum (Al). For example, lithium oxide ($Li_2O$) alone can be melted at about 1,430°C. However, an excessively high Li/Al ratio may result in a shorter lifetime of a crucible used depending on the material of the crucible. In addition, when both the Li/Al ratio and the Ca/Al ratio are excessively high, the slag may be difficult to melt, to the contrary. In light of this, the Li/Al ratio in the slag is selected to be less than 0.4. The upper limit of the Ca/Al ratio in the slag is not particularly limited, and is preferably less than 1.0, more preferably less than 0.8, and even more preferably less than 0.3.

It should be noted that the amount of the slag component (Al, Li, Ca) can be easily controlled by adjusting the composition of the charge and/or the amount of flux added. The flux will be described later.

Specifically, flux containing calcium (Ca) may be added to a material to be treated, for adjusting the amount of calcium (Ca) in the slag. The flux preferably contains calcium (Ca) as a principal component, and examples thereof include calcium oxide (CaO) and calcium carbonate ($CaCO_3$) . Further, the flux may be added at a stage before the reductive melting treatment step. Namely, one of the preparation step and the oxidation and reductive melting step (oxidation treatment, reductive melting treatment), or both may include adding the flux to the charge and/or the material to be treated. It should be noted that when the charge itself contains a large amount of the calcium (Ca) component, the addition of the flux may be eliminated. Incidentally, the flux is preferably free of silicon (Si).

The oxidation and reductive melting step may include performing the oxidation treatment and the reductive melting treatment simultaneously or separately. The simultaneous method may include blowing an oxidizing agent into the molten product being produced during the reductive melting treatment. Specifically, an oxidizing agent through a metal tube (lance) inserted in the molten product produced in the reductive melting treatment is bubbled into the molten product, to perform the oxidation treatment simultaneously with the reductive melting treatment. In this case, the oxidizing agent may be air, pure oxygen, an oxygen-rich gas, or any other oxygen-containing gas.

Alternatively, the oxidation treatment and the reductive melting treatment in oxidation and reductive melting step may be preferably performed separately. The separate method may include oxidatively roasting the prepared charge to produce an oxidatively roasted product (oxidation treatment), and subsequently reductively melting the resulting oxidatively roasted product to produce a reduced product (reductive melting treatment).

The phases in the oxidation and reductive melting step, i.e., the oxidation treatment and the reductive melting treatment, will be described in detail.

(Oxidation Treatment)

The oxidation treatment includes oxidatively roasting the charge to produce an oxidatively roasted product (hereinafter, may also be referred to as "oxidative roasting treatment"). Even in the case where the charge contains carbon, the oxidative roasting treatment can oxidize and remove the carbon, and thus accelerate the integration of valuable metals into an alloy in the subsequent reductive melting treatment.

In the reductive melting treatment as described later, the valuable metal is reduced to localized molten fine particles; in the course of this process, carbon contained in the charge can physically interfere with the gathering of the molten fine particles (valuable metal). Without the oxidative roasting treatment, therefore, carbon may interfere with the gathering and integration of the molten fine particles, and thus interfere with the separability between the metallic material (molten alloy) and the slag, which may lead to a reduction in valuable metal recovery ratio. On the other hand, the previous removal of carbon by the oxidative roasting treatment will facilitate the gathering and integration of the molten fine particles (valuable metal) produced in the reductive melting treatment and provide a further increase in valuable metal recovery ratio.

In the oxidative roasting treatment, the degree of oxidation may be controlled as described below. In general, as mentioned above, aluminum (Al), lithium (Li), carbon (C), manganese (Mn), phosphorus (P), iron (Fe), cobalt (Co), nickel (Ni), and copper (Cu) preferentially oxidize in the order of: Al > Li > C > Mn > P > Fe > Co > Ni > Cu. The oxidation treatment may include allowing the treatment to proceed until the total amount of aluminum (Al) is oxidized. The treatment may be accelerated to such an extent that iron (Fe) is partially oxidized, but the degree of oxidation is preferably kept at such a level that oxidation of cobalt (Co) and recovery thereof into a slag are prevented.

In the oxidative roasting treatment, an appropriate amount of an oxidizing agent is preferably introduced to control the degree of oxidation. The introduction of the oxidizing agent is particularly preferable in a case where the charge contains discarded lithium ion batteries. A certain lithium ion battery has an outer case including a metal, such as aluminum and iron. It also has positive and negative electrode materials containing an aluminum foil and a carbon material, respectively. The assembled battery also has an outer package including a plastic material. Since such materials can all act as a reducing agent, the degree of oxidation can be controlled within an appropriate range by introducing the oxidizing agent.

The oxidizing agent may be any type capable of oxidizing carbon and the less valuable metal (e.g., Al), and preferably, the oxidizing agent is air, pure oxygen, an oxygen-rich gas, or any other oxygen-containing gas, which is easy to handle. As a guide, the oxidizing agent may be introduced in an amount (chemical equivalents) about 1.2 times (e.g., 1.15 to 1.25 times) that required to oxidize all target materials to be oxidatively roasted.

The oxidative roasting treatment preferably includes heating at a temperature of 700°C or more and 1,100°C or less, more preferably at a temperature of 800°C or more and 1,000°C or less. At 700°C or more, carbon can be oxidized in a shorter period of time with a higher efficiency. At 1,100°C or less, the oxidative roasting can be performed at a low thermal energy cost with a high efficiency.

The oxidative roasting treatment may be performed using a known roasting furnace. The oxidative roasting is preferably performed in a preliminary furnace different from the melting furnace for use in the subsequent reductive melting treatment. The roasting furnace may be any type capable of roasting a crushed product while supplying the oxidizing agent (e.g., oxygen) for the treatment in its interior. The roasting furnace may be, for example, a conventionally known rotary kiln or tunnel kiln (hearth-type furnace).

(Reductive Melting Treatment)

The reductive melting treatment may include subjecting the oxidatively roasted product obtained through the oxidative roasting treatment described above to heating and reductive melting to produce a reduced product. The treatment aims to keep intact the oxide of the less valuable metal (e.g., Al), which is produced in the oxidative roasting treatment, and to melt and reduce the valuable metals (Cu, Ni, Co) into a molten alloy capable of being recovered. The alloy resulting from the reductive melting treatment is also referred to as the "molten alloy".

The reductive melting treatment preferably includes introducing a reducing agent. The reducing agent is preferably carbon and/or carbon monoxide. Carbon has the ability to readily reduce valuable metals (Cu, Ni, Co) to be recovered. For example, one mole of carbon can reduce two moles of valuable metal oxides (e.g., copper oxide, nickel oxide). Moreover, the reduction technique using carbon or carbon monoxide is highly safe as compared to techniques using a metallic reducing agent (e.g., thermite reaction methods using aluminum).

The carbon may be artificial graphite and/or natural graphite. Coal or coke may also be used if there is no risk of impurity contamination.

The reductive melting may be performed at any heating temperature, and preferably, the reductive melting is performed at a heating temperature of 1,300°C or more and 1,575°C or less, more preferably at a heating temperature of 1,350°C or more and 1,450°C or less. At a temperature above 1,600°C, unnecessary consumption of thermal energy may occur, and heavy deterioration of a refractory component, such as a crucible, may also occur to reduce productivity. At a temperature below 1,300°C, the separability between the slag and the molten alloy may degrade, which may cause a decrease in recovery ratio. The reductive melting treatment may be performed using a known technique. Such a technique may include, for example, charging the oxidatively roasted product into an alumina ($Al_2O_3$) crucible; and heating it by resistance heating or other methods. In some cases, generation of harmful substances, such as dust and exhaust gas, occurs during the reductive melting treatment. Such harmful substances can be detoxified by a known treatment, such as an exhaust gas treatment.

The use of the oxidative roasting treatment prior to the reductive melting treatment can eliminate the need for an oxidation treatment in the reductive melting treatment. Incidentally, in a case where insufficient oxidation occurs in the oxidative roasting treatment or in a case where the degree of oxidation is to be further controlled, however, an additional oxidation treatment may be performed in the reductive melting treatment. The additional oxidation treatment allows for more strict control of the degree of oxidation.

[Slag Separation Step]

The slag separation step includes separating the slag from the reduced product resulting from the oxidation and reductive melting step to recover the molten alloy. The slag and the molten alloy have different specific gravities, and the slag, which has a specific gravity lower than that of the molten alloy, gathers above the molten alloy. Thus, specific gravity separation can be used to separate and recover the molten alloy from the slag.

The separation of the molten alloy from the slag and recovery of the molten alloy in the slag separation step may be followed by a sulfurization step that includes sulfurizing the resulting alloy and by a crushing step that includes crushing the mixture of the sulfurized product resulting from the sulfurization step and the alloy. Moreover, the valuable metal alloy obtained through the pyrometallurgical smelting process described above may be subjected to a hydrometallurgical process. The hydrometallurgical process includes removing impurity components and separating and refining the valuable metals (Cu, Ni, Co) to recover the individual valuable metals. Additionally, the hydrometallurgical process may be performed using known treatment techniques, such as neutralization and solvent extraction.

As described above, the recovery method according to the present embodiment performs the treatments while controlling the Li/Al mole ratio and the Ca/Al mole ratio in the slag within the specific range described above, and produces a slag with a melting temperature of 1,575°C or less, typically with a melting temperature of 1,450°C or less, which means that the resulting slag will exhibit a low viscosity. Therefore, the slag separation step efficiently separates the molten alloy and the slag from each other, which results in efficient and inexpensive recovery of the valuable metal.

<<2. Recovery of Valuable Metal from Discarded Lithium Ion Batteries>>

In the recovery method according to the present embodiment, the charge, i.e., the target for the treatment, may be any type so long as it contains lithium (Li) and a valuable metal. Preferably, the charge is a material which includes discarded lithium ion batteries, among others.

Discarded lithium ion batteries contain lithium (Li) and valuable metals (Cu, Ni, Co), as well as less valuable metals (Al, Fe) and carbon. From the charge including discarded lithium ion batteries, valuable metals can be efficiently separated and recovered. It should be noted that the term "discarded lithium ion battery" is intended to include not only a used lithium ion battery but also a discarded material occurring in the process of manufacturing lithium ion batteries, such as a defective product occurring in the process of manufacturing battery components such as positive electrode materials, some residues occurring in the manufacturing process, and generated refuses. Therefore, the term "discarded lithium ion battery" is interchangeable with "discarded lithium ion battery material".

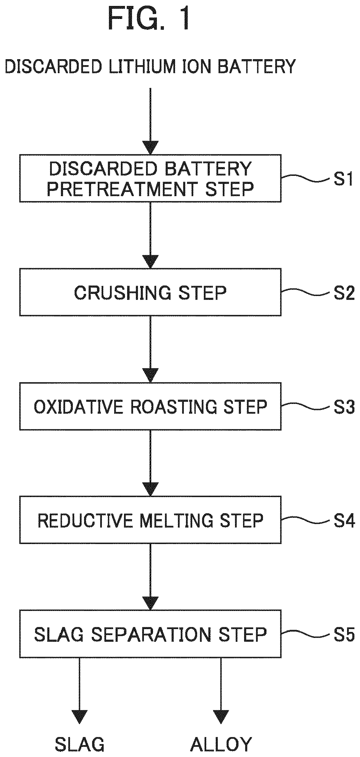

FIG. 1 is a flowchart illustrating a flow of a method for recovering valuable metals from discarded lithium ion batteries. Referring to FIG. 1, the method includes a discarded battery pretreatment step (S1) that includes removing electrolytic solutions and outer cases from discarded lithium ion batteries; a crushing step (S2) that includes crushing discarded battery components to obtain a crushed product; an oxidative roasting step (S3) that includes subjecting the crushed product to oxidative roasting; a reductive melting step (S4) that includes subjecting the oxidatively roasted product to reduction and melting to produce an alloy; and a slag separation step (S5) of separating a slag from the reduced product resulting from the reductive melting treatment to recover the molten alloy. Although not shown, the slag separation step (S5) may be followed by a sulfurization step that includes sulfurizing the resulting alloy and a crushing step (which may also be referred to as a second crushing step to distinguish it from the crushing step S2) that includes crushing the mixture of the sulfurized product resulting from the sulfurization step and the alloy. Hereinafter, each of the steps will be described in detail.

[Discarded Battery Pretreatment Step]

The discarded battery pretreatment step (S1) is performed in order to prevent explosion of discarded lithium ion batteries, to detoxify discarded lithium ion batteries, and to remove outer cases. Lithium ion batteries have a sealed system in which the electrolytic solution and other components are contained. Crushing intact lithium ion batteries is dangerous because of the risk of explosion, and thus, some measures should preferably be taken for discharging and for removal of the electrolytic solution. In many cases, the outer case includes a metal, such as aluminum (Al) or iron (Fe), and such a metallic outer case is relatively easy to recover directly. Thus, the discarded battery pretreatment step (S1) that includes removing the electrolytic solution and the outer case will increase the safety and the ratio of recovery of valuable metals (Cu, Ni, Co) .

The discarded battery pretreatment step (S1) may be performed using any appropriate procedure, and for example, the pretreatment step may include mechanically opening holes in the discarded batteries with needle-shaped blades to allow the electrolytic solution to flow out. Alternatively, the pretreatment step may include burning the discarded batteries and thus to detoxify them.

When aluminum (Al) and iron (Fe) contained in the outer case are recovered, the pretreatment step (S1) may include crushing the removed outer cases; and then sieving the crushed product with a sieve shaker. When made of aluminum (Al), the case can be easily crushed with low power, so that aluminum (Al) can be efficiently recovered. Magnetic force sorting may also be used to recover iron (Fe) from the outer case.

[Crushing Step]

The crushing step (S2) includes crushing the discarded lithium ion battery components to give a crushed product. The crushing treatment in the crushing step (S2) aims to increase the reaction efficiency of the pyrometallurgical smelting process. The increase in the reaction efficiency results in an increase in the ratio of recovery of valuable metals (Cu, Ni, Co) .

The crushing may be performed using any specific procedure. The crushing may be performed using a conventionally known crushing machine, such as a cutter mixer. It should be noted that a combination of the discarded battery pretreatment step (S1) and the crushing step (S2) corresponds to the "preparation step" described above.

[Oxidative Roasting Step]

The oxidative roasting step (S3) includes oxidatively roasting the crushed product, resulting from the crushing step (S2), to produce an oxidatively roasted product. This step corresponds to the oxidation treatment (oxidative roasting treatment) in the "oxidation and reductive melting step" described above, and the details of this step are as described hereinabove.

[Reductive Melting Step]

The reductive melting step (S4) includes reducing the oxidatively roasted product, resulting from the oxidative roasting step (S3), to produce a reduced product. This step corresponds to the reductive melting treatment in the "oxidation and reductive melting step" described above, and the details of this step are as described hereinabove.

[Slag Separation Step]

The slag separation step (S5) includes separating the slag from the reduced product, resulting from the reductive melting step (S4), to recover the molten alloy. This step corresponds to the "slag separation step" described above, and the details of this step are as described hereinabove.

Additionally, the slag separation step may be followed by a sulfurization step and a crushing step. The resulting valuable metal alloy may also be subjected to a hydrometallurgical process. The details of the sulfurization step, the crushing step, and the hydrometallurgical process are as described above.

EXAMPLES

In the following, the present invention will be described in more detail with reference to Examples and Comparative Examples, but the Examples below are not intended in any way to limit the present invention.

<<1. Examples Using Reagents>>

(Materials)

For a test for investigating the influence of lithium (Li) and manganese (Mn) on the melting temperature of a slag, reagent-grade $Al_2O_3$, CaO, $Li_2CO_3$, $MnO_2$, and Mn were used. $MnO_2$ and Mn were added at $MnO_2$:Mn (mole ratio) of 1:1, assuming that $MnO_2$ and Mn form MnO in a reductive melting treatment.

(Test Apparatus)

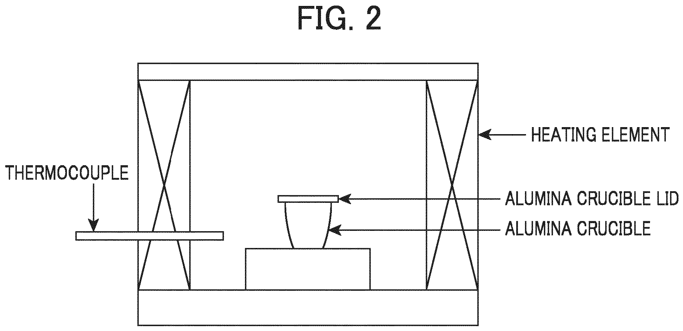

FIG. 2 illustrates the configuration of an apparatus for use in the test. In the present Example, reagent-grade $Al_2O_3$, CaO, $LiCO_3$, $MnO_2$, and Mn were mixed in a predetermined ratio, and 20 g of the mixture was placed in an alumina crucible having a volume of 30 mL, heated in a small muffle-type electric furnace to a temperature of 1,873 K and kept at the same temperature for 60 sec. Quantitative analysis was performed using inductively-coupled plasma atomic emission spectrophotometry, and the melting temperature was measured at each composition using a hot thermocouple method.

(Test Results)

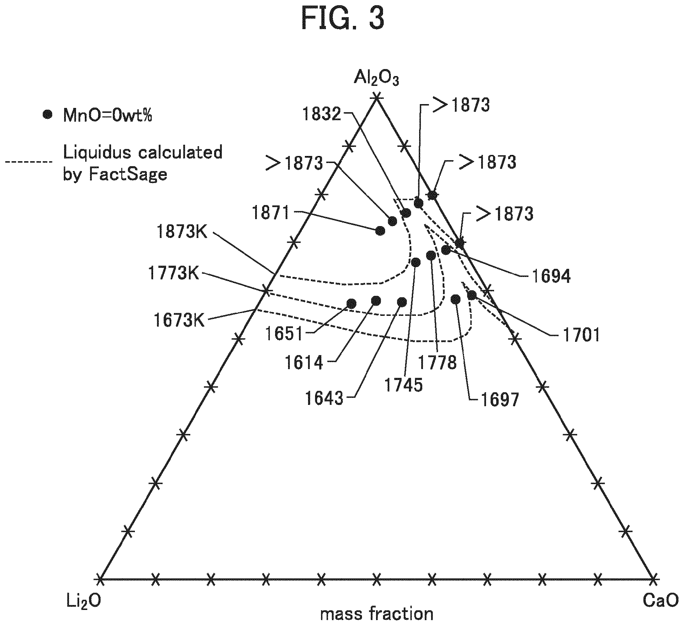

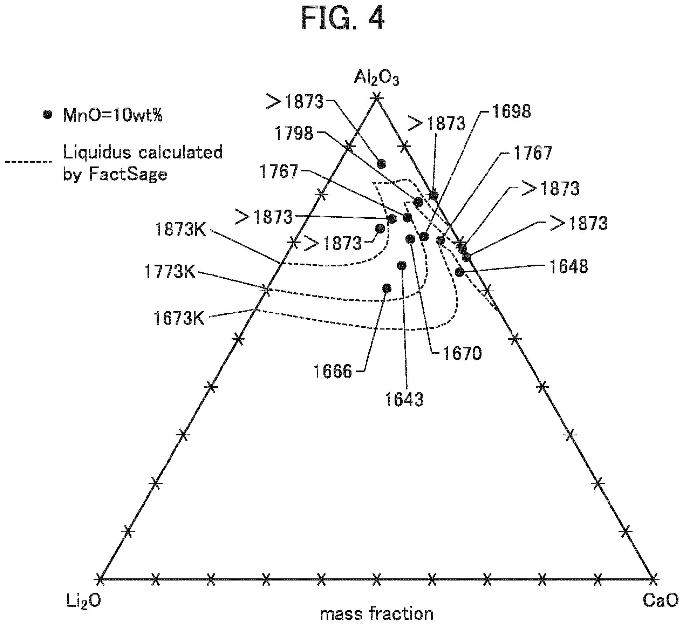

FIG. 3 shows a phase diagram of an $Al_2O_3$-CaO-$Li_2O$ system (MnO = 0% by mass), with the measurements of the melting temperature plotted. As shown in FIG. 3, in the composition of a weight ratio of CaO/(CaO + $Al_2O_3$) = about 0.2 and 0.3, the melting temperature for $Li_2O$ = 5 to 10% by mass was decreased compared with that for $Li_2O$ = 0% by mass. On the other hand, the melting temperature for an increased mass fraction of $Li_2O$ of 15% by mass tended to be higher than that for $Li_2O$ = 5 to 10% by mass. It should be noted that dotted lines in FIG. 3, and FIG. 4, which will be described later, indicate liquiduses calculated by a thermodynamic calculation software (FactSage).

These results revealed that the addition of 5% by mass of $Li_2O$ to the system of CaO/(CaO + $Al_2O_3$) = 0.3 resulted in a decrease in the melting temperature of the system by 100 K or more. It was also revealed that an increase in $Li_2O$ mass fraction to 15% by mass resulted in an increase in the melting temperature, and a further increase in $Li_2O$ mass fraction reversed this trend leading to a decrease in the melting temperature.

Further, FIG. 4 shows a phase diagram of $Al_2O_3$-CaO-$Li_2O$-MnO (10% by mass) system, with the measurements of the melting temperature plotted. As shown in FIG. 4, a tendency mostly similar to the that for the Mn mole ratio of 0% by mass was found. Incidentally, a tendency of the melting range at 1,773 K to somewhat expand was noted. In view of this result, it is presumed that a similar tendency is found for a MnO mole ratio in the slag of about 15% by mass or less.

<<2. Examples Using Discarded Lithium Ion Batteries>>

In the following, Examples which involved a treatment using discarded lithium ion batteries including lithium (Li) and valuable metals are described.

[Flow of Recovery Treatment of Valuable Metals (Operation in Each Step)]

(Discarded Battery Pretreatment Step)

First, discarded lithium ion batteries were provided including 18650-type cylindrical batteries, used rectangular car batteries, and defective products collected in battery manufacturing processes. These discarded lithium ion batteries were discharged by being dipped in brine, which was followed by removal of water and roasting at 260°C in the air to decompose and remove electrolytic solutions and outer cases, so that a battery component material was obtained.

(Crushing Step)

Next, the battery component material was crushed using a crusher (tradename: Good Cutter: manufactured by Ujiie Manufacturing Co., Ltd.).

(Oxidative Roasting Step)

Next, the crushed product was oxidatively roasted at a heating temperature of 900°C for 180 minutes in the air using a rotary kiln.

(Reductive Melting Step)

Next, graphite powder in an amount 0.6 times the total moles of valuable metals (Cu, Ni, and Co) was added as a reducing agent to the oxidatively roasted product, and further calcium oxide (CaO) as flux was mixed therewith such that the Li/Al ratio (mole ratio) and the Ca/Al ratio (mole ratio) in the slag to be formed were as specified in Table 1 below, to form a mixture, which was charged into an alumina crucible. Each sample was heated to a reductive melting temperature (Table 1) via resistive heating to undergo reductive melting treatment for 60 minutes for alloy formation. Thus, a molten alloy and a slag were obtained.

(Slag Separation Step)

The slag was separated from the reduced product, so that the molten alloy was recovered, which was named the recovered alloy.

[Analysis of Components in Slag]

The analysis of the components in the slag separated from the reduced product was performed as follows. Specifically, the slag was cooled and then crushed. Each crushed product was subjected to analysis by X-ray fluorescence spectroscopy.

(Valuable Metal Recovery Ratio)

The ratio of recovery of a valuable metal (Co) was determined as follows. Specifically, the following equation:

```
(weight of Co in recovered alloy)/(weight of Co in recovered

alloy + weight of Co in slag) × 100
```

was employed. Incidentally, the analysis of the components in the recovered alloy was performed by X-ray fluorescence spectroscopy.

[Evaluation Results]

Table 1 below shows the results of the ratio of recovery of cobalt in the melting at a melting temperature of 1,450°C and 1,550°C with varying mole ratios of Li/Al and Ca/Al in the slag to be formed.

[Table 1]

| Sample | Charge composition (mole ratio) | | Melting temperature (°C) | Cobalt recovery ratio (%) |
|---|---|---|---|---|
| | Li/Al | Ca/Al | | |
| Example 1 | 0.15 | 0.35 | 1450 | 97.5 |
| Example 2 | 0.29 | 0.20 | 1550 | 95.5 |
| Example 3 | 0.38 | 0.55 | 1450 | 97.3 |
| Example 4 | 0.21 | 0.57 | 1450 | 96.9 |
| Example 5 | 0.33 | 0.35 | 1550 | 95.3 |
| Comparative Example 1 | 0.14 | 0.21 | 1550 | 87.2 |
| Comparative Example 2 | 0.45 | 0.19 | 1550 | 89.3 |
| Comparative Example 3 | 0.30 | 0.14 | 1550 | 82.5 |

As can be seen from the results in Table 1, Examples 1 to 5 exhibit favorable separability of the slag and the metal, and all the sample thereof gave a favorable result, i.e., a ratio of recovery of cobalt of 95% or more.

On the other hand, all of Comparative Examples 1 to 3 resulted in a lower ratio of recovery of cobalt than the Examples. Specifically, it is presumed that the slag was melted incompletely, and consequently had a high viscosity, leading to low separability of the slag and the metal. A large number of small metal grains were present in the slag, and the ratio of recovery of cobalt was low accordingly.

## Claims

1. A method for recovering a valuable metal, the method comprising:

   a preparation step of preparing a charge comprising at least lithium (Li) and a valuable metal;
   an oxidation and reductive melting step of subjecting the charge to an oxidation treatment and a reductive melting treatment to produce a reduced product comprising a molten alloy and a slag, the molten alloy comprising the valuable metal; and
   a slag separation step of separating the slag from the reduced product to recover the molten alloy,
   wherein a mole ratio of lithium (Li) to aluminum (Al) (Li/Al ratio) in the slag is 0.15 or more and less than 0.40, and
   a mole ratio of calcium (Ca) to aluminum (Al) (Ca/Al) in the slag is 0.15 or more.

2. The method according to claim 1, wherein the preparation step or the oxidation and reductive melting step, or both further comprise adding flux comprising calcium (Ca) to the charge and/or a material to be treated.

3. The method according to claim 1 or 2, wherein the oxidation treatment comprises oxidatively roasting the charge to produce an oxidatively roasted product, and
   the reductive melting treatment comprises reductively melting the oxidatively roasted product to produce a reduced product.

4. The method according to any one of claims 1 to 3, wherein the reductive melting treatment comprises introducing a reducing agent.

5. The method according to any one of claims 1 to 4, wherein the reductive melting treatment comprises heating at a temperature of 1,300°C or more and 1,575°C or less.

6. The method according to claim 5, wherein the reductive melting treatment comprises heating at a temperature of 1,350°C or more and 1,450°C or less.

7. The method according to any one of claims 1 to 6, wherein the charge comprises a discarded lithium ion battery.

8. The method according to any one of claims 1 to 7, wherein the slag comprises 15% by mass or less of manganese oxide (MnO).

# FIG. 1

DISCARDED LITHIUM ION BATTERY

↓

| DISCARDED BATTERY PRETREATMENT STEP | S1 |

↓

| CRUSHING STEP | S2 |

↓

| OXIDATIVE ROASTING STEP | S3 |

↓

| REDUCTIVE MELTING STEP | S4 |

↓

| SLAG SEPARATION STEP | S5 |

↓                    ↓

SLAG            ALLOY

# FIG. 2

THERMOCOUPLE

HEATING ELEMENT

ALUMINA CRUCIBLE LID

ALUMINA CRUCIBLE

# FIG. 3

# FIG. 4

## INTERNATIONAL SEARCH REPORT

| International application No. |
| --- |
| **PCT/JP2021/045997** |

**A. CLASSIFICATION OF SUBJECT MATTER**

*C22B 1/00*(2006.01)i; *C22B 1/10*(2006.01)i; *C22B 5/02*(2006.01)i; *C22B 7/00*(2006.01)i; *C22B 15/00*(2006.01)i;
*C22B 23/02*(2006.01)i; *C22B 26/12*(2006.01)i
FI: C22B5/02; C22B7/00 C; C22B26/12; C22B1/10; C22B15/00; C22B23/02; C22B1/00 101

According to International Patent Classification (IPC) or to both national classification and IPC

**B. FIELDS SEARCHED**

Minimum documentation searched (classification system followed by classification symbols)

C22B1/00; C22B1/10; C22B5/02; C22B7/00; C22B15/00; C22B23/02; C22B26/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP 1589121 A1 (UMICORE) 26 October 2005 (2005-10-26)<br>paragraphs [0001], [0007]-[0032], table 1, 2 | 1-8 |
| A | JP 2013-506048 A (UMICORE) 21 February 2013 (2013-02-21)<br>paragraphs [0030]-[0039] | 1-8 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 February 2022** | **01 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/045997**

| Patent document cited in search report | | | Publication date (day/month/year) | Patent family member(s) | | | Publication date (day/month/year) |
|---|---|---|---|---|---|---|---|
| EP | 1589121 | A1 | 26 October 2005 | US | 2005/0235775 | A1 | |
| | | | | PL | 1589121 | T | |
| | | | | AT | 419403 | T | |
| JP | 2013-506048 | A | 21 February 2013 | WO | 2011/035915 | A1 | |
| | | | | page 6, line 7 to page 8, line 14 | | | |
| | | | | US | 8840702 | B2 | |
| | | | | EP | 2480697 | A1 | |
| | | | | KR | 10-2012-0083430 | A | |
| | | | | TW | 201130184 | A | |
| | | | | DK | 2480697 | T | |
| | | | | LT | 2480697 | T | |
| | | | | PT | 2480697 | T | |
| | | | | SI | 2480697 | T | |
| | | | | HR | P20200124 | T | |
| | | | | PL | 2480697 | T | |
| | | | | ES | 2768050 | T | |

Form PCT/ISA/210 (patent family annex) (January 2015)

**EP 4 286 545 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015096945 A

- JP 5853585 B